# NOUVEAU FASCICULE DE BREVET EUROPEEN

(11) **EP 0 747 796 B2**
(45) Date de publication et mention de la décision concernant l'opposition: **21.11.2007**
(45) Mention de la délivrance du brevet: 17.10.2001
(21) Numéro de dépôt: 96401179.5
(22) Date de dépôt: 03.06.1996
(51) Int. Cl.: G05D 16/10

(54) **Ensemble robinet/détendeur pour bouteille de gaz et bouteille de gaz équipée d'un tel ensemble**
Druckreduzierventilanordnung für Gasflaschen und damit ausgerüstete Gasflasche
Pressure-reducing valve assembly for gas bottle and gas bottle equipped therewith

(30) Priorité: 08.06.1995 FR 9506784
(43) Date de publication de la demande: 11.12.1996
(60) Demande divisionnaire: 00400776.1
(73) Titulaire: L'AIR LIQUIDE, Société Anonyme pour l'Etude et l'Exploitation des Procédés Georges Claude, 75007 Paris (FR)
(72) Inventeur: Arzenton, Marco, 37135 Verone (IT); Beaco, Bruno, 37135 Verone (IT); Cannet, Gilles, 95620 Parmain (FR); Lasnier, Didier, 95490 Vaureal (FR); Pisot, Philippe, 95290 L'Isle Adam (FR); Thouvier, Stéphane, 95110 Sannois (FR)
(74) Mandataire: Le Moenner, Gabriel

(56) Documents cités:
- EP-A- 0 275 242
- EP-A- 0 308 875
- EP-A- 0 443 283
- EP-A- 0 465 397
- EP-A- 0 467 769
- EP-A- 0 588 531
- EP-A- 0 591 840
- EP-A- 0 688 983
- WO-A-82/01580
- WO-A-86/01871
- DE-A- 3 441 348
- FR-A- 2 399 610
- JP-A- 539 898
- JP-A- 3 219 172
- JP-A- 5 215 299
- LU-A- 86 802
- US-A- 3 043 332
- US-A- 4 103 806
- US-A- 4 550 746
- US-A- 5 009 249
- US-D- 3 347 961
- Brochure: Integrated valve and regulator, IVAR, de Gas Control Equipment GCE

## Description

La présente invention concerne un ensemble robinet/détendeur pour bouteille de gaz sous pression.

Classiquement, les bouteilles de gaz sous pression étaient équipées d'un robinet qui devait être connecté à un détendeur disponible sur site, avec les inconvénients afférents d'opérations d'assemblage/ désassemblage. Aussi, a-t-on proposé récemment, en particulier dans le domaine médical, des ensembles combinés robinet/détendeur connectables directement à au moins un circuit d'utilisation basse tension. De tels ensembles sont décrits dans les documents EP-A-308 875 et EP-A-629 937, où une isolation entre les fractions de circuits haute et basse pression peut être assurée par le déplacement d'un détendeur pré-réglé, et dans le document EP-A-275 242, où une isolation est prévue en sortie de circuit basse-pression.

La présente invention a pour objet de proposer un ensemble de robinet/détendeur perfectionné, de conception particulièrement robuste et ramassée permettant son intégration dans un capotage adapté, offrant une ergonomie et une sécurité accrues et convenant à de nombreuses applications, notamment dans le domaine du soudage.

Pour ce faire, l'invention propose un ensemble robinet/détendeur selon la revendication 1.

Selon d'autres caractéristiques plus particulières de l'invention :
- l'ensemble comporte un deuxième circuit de gaz formé dans le corps et distinct du premier circuit, pour le remplissage de la bouteille lorsque l'ensemble est monté sur cette bouteille ;
- l'ensemble comporte des moyens de réglage manuel du détendeur qui s'étend avantageusement suivant un axe sensiblement orthogonal à l'axe de l'embase de montage du corps.

La présente invention a également pour objet un ensemble du type défini ci-dessus disposé dans un capotage de protection également monté sur la bouteille et formant chapeau de manutention de cette dernière. La présente invention a enfin pour objet une bouteille de gaz sous pression équipée d'un ensemble tel que défini ci-dessus.

D'autres caractéristiques et les avantages de la présente invention ressortiront de la description suivante de modes de réalisation donnés à titre illustratif mais nullement limitatif, faite en relation avec les dessins annexés, sur lesquels :
- la figure 1 est une vue en perspective d'un ensemble selon l'invention en place dans un capotage figuré en lignes fantômes ;
- la figure 2 est une vue schématique du dessus de l'ensemble capoté de la figure 1 ;
- la figure 3 est une vue partiellement en coupe suivant la ligne de coupe en III-III de l'ensemble de la figure 2 monté en position sur une bouteille de gaz ;
- la figure 4 est une vue du dessus, partiellement en coupe longitudinale, de l'ensemble de la figure 2 ;
- la figure 5 est une vue de détail, partiellement en coupe suivant la ligne de coupe V-V de la figure 2 ;
- la figure 6 est une vue de côté, partiellement en coupe selon la ligne de coupe VI-VI de la figure 2 ; et
- la figure 7 est une demi-coupe longitudinale d'une variante de réalisation d'un capotage pour un ensemble selon l'invention.

Sur les dessins, on reconnaît un ensemble compact robinet/détendeur composé essentiellement d'un corps métallique 1 comportant une extrémité inférieure profilée formant embase de montage 2 et sur lequel sont rapportés, comme on le verra en détail plus avant, un raccord de sortie 3, un boîtier de détendeur 4, un levier de commande 5, un raccord de remplissage 6, un manomètre haute pression 7 et un manomètre basse pression 8.

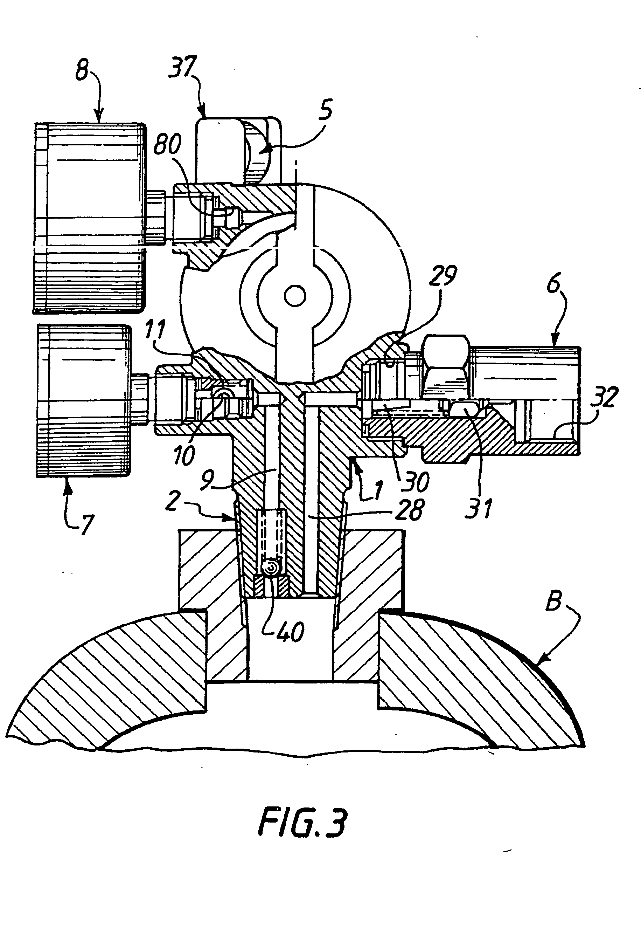

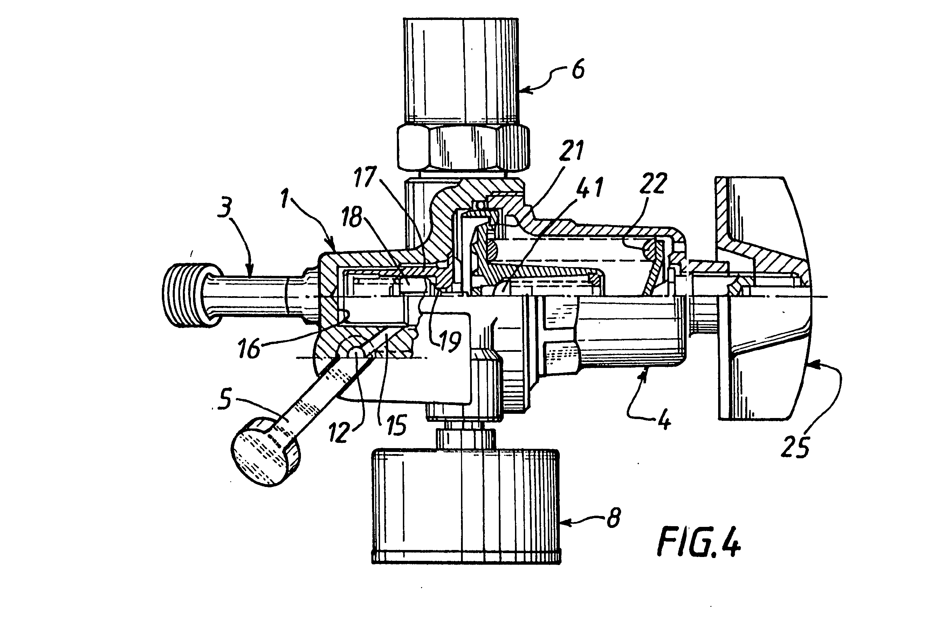

Comme on le voit mieux sur les figures 3 à 6, le corps 1, réalisé par exemple en laiton, définit intérieurement un circuit d'utilisation constitué d'une portion de circuit haute pression comprenant : une partie amont 9 s'étendant dans l'embase 2, sensiblement parallèlement à l'axe de cette dernière, et débouchant dans un passage transversal 10 servant au montage du manomètre HP 7 et communiquant lui-même avec un passage transversal 11 débouchant lui-même dans un alésage étagé 12 recevant le clapet d'isolation 13 et formant un siège 14 pour ce dernier ; la portion de circuit en aval du siège 14 de l'alésage étagé 12 communique, par un passage transversal 15, avec une chambre cylindrique étagée 16 ouvrant vers l'extérieur du corps 1 par une ouverture de diamètre élargi dans laquelle est montée l'extrémité annulaire du boîtier de détendeur 4. On notera que, étant en communication permanente avec le volume de stockage dans la bouteille B, le manomètre HP 7 assure également la fonction de jauge de remplissage de la bouteille. Dans la partie de diamètre réduit de la chambre 16 est montée un sous-ensemble unitaire comprenant une cage tubulaire 17 abritant un clapet de régulation 18 et formant un siège 19 pour ce dernier. Le clapet 18 comporte une portion de tige avant 20 s'étendant au-delà du siège 19 et susceptible de coopérer avec la face avant d'un piston de détendeur 21 coulissant dans le corps 1 et le boîtier 4 en étant sollicité dans la direction vers la cage 17 par un ressort 22 prenant appui arrière sur une coupelle 23 et dont la force est réglable par déplacement de la coupelle 23 au moyen d'une tige filetée 24 montée dans le boîtier 4 et actionnable manuellement par un bouton ou un volant de réglage 25. L'axe du clapet 18 et du piston de détendeur 21 est sensiblement orthogonal à l'axe de l'embase de montage 2. La chambre basse pression 26 en avant du piston 21 débouche vers l'extérieur du corps 1, à l'opposé du bouton 25 du détendeur, par un passage de sortie 27 qui s'étend dans le corps 1 parallèlement à l'axe du clapet 18 et du piston 21 au voisinage de l'extrémité supérieure de ce dernier, et dans lequel est monté le raccord de sortie 3, et par un passage transversal 80, orthogonal au passage de sortie 27, sensiblement à l'aplomb du passage 11, et dans lequel est monté le manomètre BP 8 disposé ainsi dans l'alignement vertical du manomètre HP 7.

Comme on le voit sur la figure 3, le corps 1 définit également un circuit de remplissage de bouteille, complètement indépendant du circuit de distribution décrit ci-dessus et comportant une partie aval 28 s'étendant dans l'embase 2, parallèlement à l'axe de cette dernière, et communiquant avec un passage transversal amont 29 dans lequel est monté le raccord de remplissage 6, à l'opposé des manomètres 7 et 8 et sensiblement dans l'alignement du manomètre HP 8. Le raccord 6 forme un passage intérieur profilé pour loger, en aval, un filtre 30, en zone intermédiaire, un clapet anti-retour 31 sollicité par un ressort et se terminant par une ouverture d'entrée 32 agencée pour recevoir l'extrémité, par exemple mâle, d'une ligne de remplissage, cette extrémité mâle repoussant le clapet 31 pour donner un libre accès au fluide haute pression de remplissage vers l'intérieur de la bouteille par le passage 28.

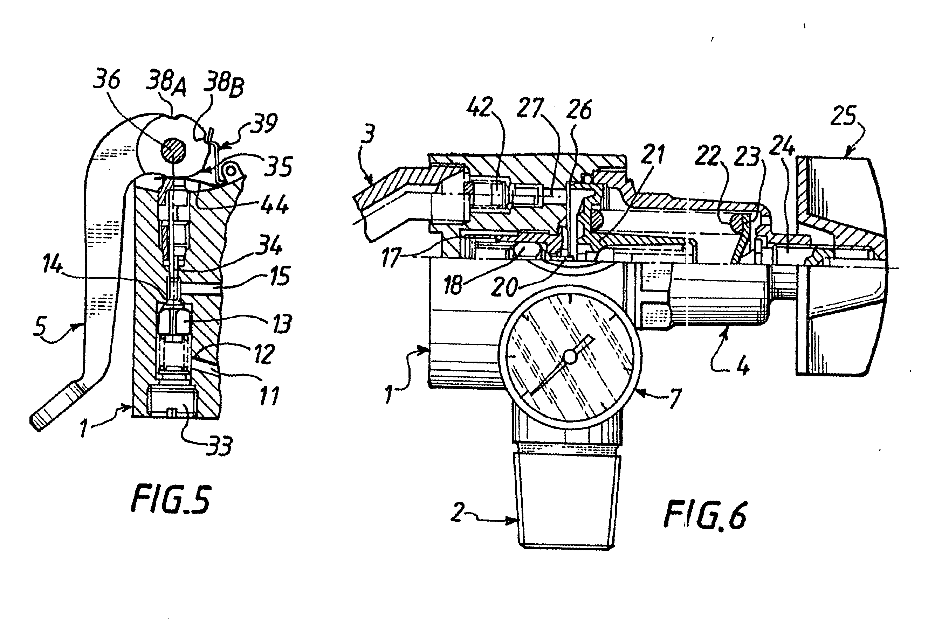

Comme on le voit sur la figure 5, le clapet d'isolation 13, sollicité vers son siège 14 par un ressort prenant appui sur un bouchon 33 fermant l'alésage 12, comporte à son extrémité avant un doigt faisant saillie au-delà du siège 14 et coopérant en appui avec une tige 34 traversant une garniture d'étanchéité et comportant une extrémité extérieure émergeant hors du bloc 1 pour coopérer avec une surface de came 35 de la tête d'articulation du levier 5 tourillonnant autour d'un axe transversal 36 dans une protubérance 37 à l'extrémité supérieure du corps 1 sensiblement entre les manomètres 7, 8 et le raccord de sortie 3. La tête du levier 5 comprend au moins deux encoches 38A, 38B coopérant avec un ressort-lame 39 monté sur le corps 1 pour maintenir le levier 5 dans l'une ou l'autre de ses positions extrêmes d'ouverture ou de fermeture, en le rendant ainsi pratiquement insensible aux vibrations. Avantageusement, une couche de matériau à faible coefficient de friction, voire autolubrifié, est disposée à l'interface entre la surface de came 35 et le capuchon de la tige 34, par exemple en interposant entre ces derniers une lame en polyimide solidarisée, au moins lors du montage, à la lame 39.

Comme représenté sur les dessins, l'ensemble selon l'invention comprend en outre avantageusement un clapet de retenue de pression 40 dans l'extrémité amont du passage 9 dans l'embase 2, un clapet de surpression 41 dans le piston de détendeur 21 et un clapet anti-retour 42 dans le passage de sortie 27, ainsi qu'un filtre en amont du passage 11 et en bout de la cage 17, respectivement.

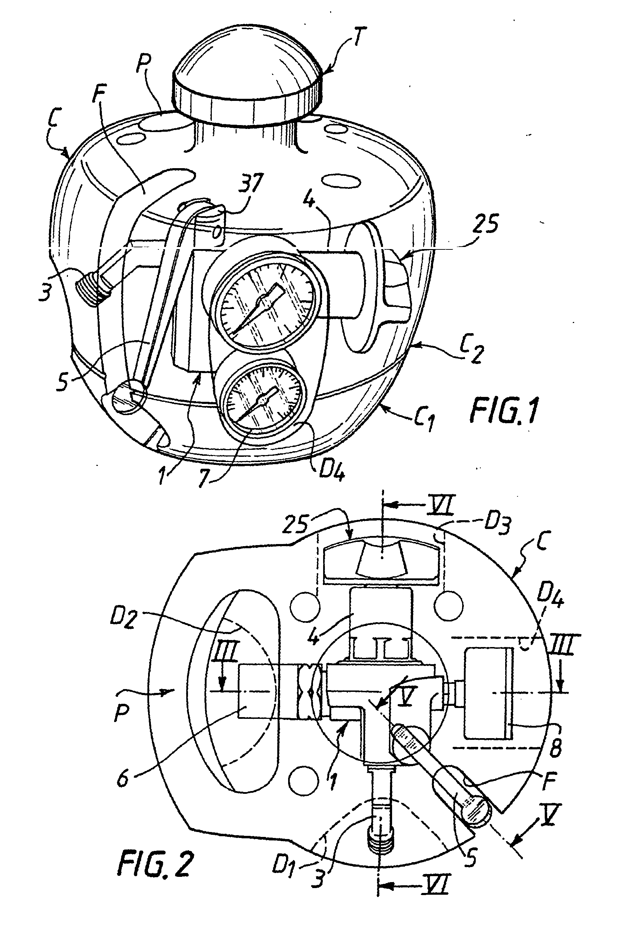

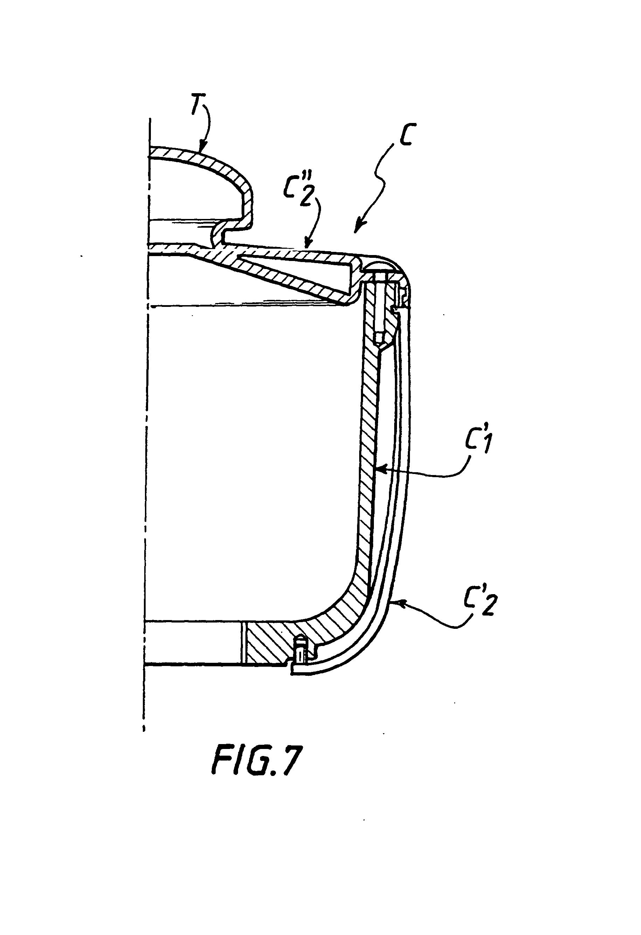

Comme on le voit bien sur les dessins, la configuration ramassée de l'ensemble robinet/détendeur, avec des organes actifs répartis sur la totalité des faces du bloc 1, permet d'intégrer totalement l'ensemble dans un capotage formant chapeau de bouteille C, dont les contours d'un mode de réalisation particulier sont représentés sur les figures 1 et 2. Dans ce mode de réalisation, le capotage/chapeau C est constitué essentiellement d'une base C₁ montée sur le col de la bouteille B autour de l'embase 2 et sur laquelle est fixée, typiquement par des tirants verticaux, une partie supérieure C₂ en forme de coque abritant l'essentiel du robinet/détendeur et comprenant une partie latérale formant poignée P et une tête supérieure T en forme de pommeau permettant la manutention de la bouteille, notamment par roulage sur le sol. Les parois latérales de la partie supérieure C₂ comportent un certain nombre de découpes ou d'évidements D₁-D₄, comme représenté schématiquement sur la figure 2, pour permettre l'accès aux raccords 3 et 6, au bouton 25 et aux manomètres 7 et 8. Les parties C₂ et C₁ comportent en outre une fente longitudinale F permettant le libre débattement entre ses positions d'ouverture et de fermeture, du levier 5 qui est normalement abrité, en position de fermeture, dans le capotage C, comme on le voit sur la figure 1. On pourra également prévoir avantageusement, vers le bas de la fente F, le montage d'un dispositif de sécurité inviolable, par exemple du type à arrachement, garantissant que le levier 5 n'a pas été actionné avant la première mise en service d'une bouteille pleine équipée de l'ensemble robinet/détendeur selon l'invention. Au moins la partie supérieure C₂ du capotage C peut être réalisée en un matériau plastique technique. Au moins la partie inférieure C₁ peut être réalisée en alliage léger métallique ou en fonte malléable. En variante, comme représenté schématiquement sur la figure 7, le capotage/chapeau est constitué d'une cage ou tulipe intérieure ajourée C'₁, typiquement en fonte malléable, fixée sur la collerette de la bouteille, autour de l'embase du robinet, et s'étendant vers le haut de façon à enclore l'ensemble robinet/ détendeur avec ses manomètres, et d'éléments de capotage externes périphériques et supérieurs C'₂, C"₂ en matériau plastique, fixés sur la cage C'₁.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Ensemble robinet/détendeur pour bouteille de gaz sous pression (B), définissant un premier circuit de gaz comportant, en série, une portion de circuit haute pression (9-12), un clapet d'isolation (13), un détendeur de pression (21, 18) et une portion de circuit basse pression (26, 27), dans lequel au moins les portions haute pression et basse pression du premier circuit de gaz sont formées dans un corps (1) comportant une embase (2) destinée à être montée sur la bouteille de gaz (B), l'ensemble comportant un moyen (5) d'actionnement du clapet d'isolation (13), indépendant du détendeur (21, 18), comprenant un levier (5) monté articulé (36) sur le corps (1), couplable au clapet d'isolation (13) et déplaçable entre une position d'ouverture et une position de fermeture.

2. Ensemble selon la revendication 1, **caractérisé en ce que** le levier (5) comprend une surface de came (35) coopérant avec un équipage (34) couplé mécaniquement au clapet d'isolation (13).

3. Ensemble selon la revendication 1 ou 2, **caractérisé en ce qu'**il comporte un deuxième circuit de gaz (28, 29) distinct du premier circuit de gaz, formé dans le corps (1) pour permettre le remplissage de la bouteille (B) lorsque l'ensemble est monté sur cette bouteille.

4. Ensemble selon l'une des revendications 1 à 3, **caractérisé en ce qu'**il comporte des moyens (23-25) de réglage manuel du détendeur (21, 18).

5. Ensemble selon la revendication 4, **caractérisé en ce que** le détendeur (21, 18) a un axe sensiblement orthogonal à l'axe de l'embase (2) du corps (1).

6. Ensemble selon la revendication 5, **caractérisé en ce que** la portion de circuit basse pression (27) débouche vers l'extérieur (3) à l'extrémité du corps (1) opposée à l'embase (2).

7. Ensemble selon la revendication 6, **caractérisé en ce que** la portion de circuit basse pression (27) débouche vers l'extérieur d'un côté du corps opposé au moyen (25) de réglage du détendeur.

8. Ensemble selon l'une des revendications 3 à 7, **caractérisé en ce qu'**il comporte deux sorties (10 ; 80) sensiblement alignées sur un même côté du corps et communiquant respectivement avec les portions de circuit haute pression et basse pression pour le montage d'indicateurs de pression haute pression et basse pression (7, 8), respectivement.

9. Ensemble selon la revendication 8, **caractérisé en ce que** le deuxième circuit de gaz débouche à l'extérieur (29) à l'opposé desdites sorties (10 ; 80).

10. Ensemble selon l'une des revendications précédentes, **caractérisé en ce qu'**au moins l'une des portions de circuit haute pression et basse pression comporte un clapet anti-retour (4U ; 42).

11. Ensemble selon l'une des revendications 3 à 10, **caractérisé en ce que** le deuxième circuit (28, 29) comprend un clapet anti-retour (31).

12. Ensemble selon l'une des revendications précédentes, **caractérisé en ce que** le détendeur est du type à piston coulissant (21) et comprend un clapet de surpression (41) dans le piston.

13. Ensemble selon l'une des revendications précédentes, **caractérisé en ce qu'**il comporte en outre un capotage de protection (C) monté sur la bouteille (B) et formant chapeau de manutention de la bouteille.

14. Ensemble selon la revendication 13, **caractérisé en ce qu'**il est totalement disposé dans le capotage (C) qui comporte des ouvertures d'accès (D₁-D₃) aux différentes entrées et sorties de l'ensemble.

15. Ensemble selon la revendication 14, **caractérisé en ce que** le capotage (C) comporte une fente latérale (F) permettant le débattement du levier (5).

16. Ensemble selon l'une des revendications 13 à 15, **caractérisé en ce que** le capotage (C) est réalisé au moins partiellement en matériau plastique.

17. Bouteille de gaz équipée d'un ensemble selon l'une des revendications précédentes.

## Claims

1. Valve/pressure reducer assembly for a pressurized-gas bottle (B), defining a first gas circuit comprising, in series, a high-pressure circuit portion (9 - 12), an isolating valve (13), a pressure reducer (21, 18), and a low-pressure circuit portion (26, 27), in which assembly at least the high-pressure and low-pressure portions of the first gas circuit are formed in a body (1) comprising a base (2) designed to be mounted on the gas bottle (B), the assembly having a means (5) for actuating the isolating valve (13) independently of the pressure reducer (21, 18), comprising a lever (5) pivoting (36) on the body (1), connectable to the isolating valve (13) and moveable between an open position and a closed position.

2. Assembly according to Claim 1, **characterized in that** the lever (5) comprises a cam surface (35) acting on a device (34) connected mechanically to the isolating valve (13).

3. Assembly according to Claim 1 or 2, **characterized in that** it comprises a second gas circuit (28, 29) separate from the first gas circuit, and formed in the body (1) to enable the bottle (B) to be filled when the assembly is mounted on this bottle.

4. Assembly according to one of Claims 1 to 3, **characterized in that** it comprises means (23 - 25) for the manually adjusting the pressure reducer (21, 18).

5. Assembly according to Claim 4, **characterized in that** the pressure reducer (21, 18) has an axis approximately perpendicular to the axis of the base (2) of the body (1).

6. Assembly according to Claim 5, **characterized in that** the low-pressure circuit portion (27) opens to the outside (3) at the opposite end of the body (1) from the base (2).

7. Assembly according to Claim 6, **characterized in that** the low-pressure circuit portion (27) opens to the outside on a side of the body away from the pressure reducer-adjustment means (25).

8. Assembly according to one of Claims 3 to 7, **characterized in that** it comprises two outlets (10; 80) approximately aligned with each other on the same side of the body and communicating with the high-pressure and low-pressure circuit portions, respectively, for the mounting of high-pressure and low-pressure indicators (7, 8), respectively.

9. Assembly according to Claim 8, **characterized in that** the second gas circuit opens to the outside (29) in the opposite direction to said outlets (10; 80).

10. Assembly according to one of the preceding claims, **characterized in that** either or both of the high-pressure and low-pressure circuit portions comprises a non-return valve (40; 42).

11. Assembly according to one of Claims 3 to 10, **characterized in that** the second circuit (28, 29) comprises a non-return valve (31).

12. Assembly according to one of the preceding claims, **characterized in that** the pressure reducer is of the sliding piston type (21) and comprises a relief valve (41) in the piston.

13. Assembly according to one of the preceding claims, **characterized in that** it also comprises a protective cover (C) mounted on the bottle (B) and forming a bottle handling knob.

14. Assembly according to Claim 13, **characterized in that** it is completely contained inside the cover (C) which has access openings (D₁ - D₃) to the assembly's various inlets and outlets.

15. Assembly according to Claim 14, **characterized in that** the cover (C) has a lateral slot (F) for moving the lever (5).

16. Assembly according to one of Claims 13 to 15, **characterized in that** the cover (C) is made at least partly of plastic.

17. Gas bottle equipped with an assembly according to one of the preceding claims.

## Patentansprüche

1. Sicherheitsregler-Anordnung für unter Druck stehende Gasflasche (B), einen ersten Gaskreislauf definierend, der in Reihe geschaltet einen Hochdruckkreislaufabschnitt (9-12), ein Absperrventil (13), ein Druckminderventil (21, 18) und einen Niederdruckkreislaufabschnitt (26, 27) aufweist, in dem mindestens die Hockdruck- und Niederdruckabschnitte des ersten Gaskreislaufes in einem Körper (1) ausgebildet sind, der einen auf die Gasflasche (B) aufzusetzenden Sockel (2) umfasst, wobei die Anordnung ein vom Druckminderventil (21, 18) unabhängiges Mittel (5) zum Betätigen des Absperrventils (13) aufweist, das einen am Körper (1) angelenkten (36) Hebel (5) umfasst, der mit dem Absperrventil (13) koppelbar und zwischen einer Öffnungsstellung und einer Schließstellung verstellbar ist.

2. Anordnung nach Anspruch 1, **dadurch gekennzeichnet, dass** der Hebel (5) eine Nockenfläche (35) umfasst, die mit einem mechanisch mit dem Absperrventil (13) gekoppelten Organ (34) zusammenwirkt.

3. Anordnung nach Anspruch 1 oder 2, **dadurch gekennzeichnet, dass** sie einen vom ersten Gaskreislauf unabhängigen zweiten Gaskreislauf (28, 29) aufweist, der in dem Körper (1) ausgebildet ist und bei auf der Flasche (B) aufgesetzter Anordnung zum Füllen der Flasche dient.

4. Anordnung nach einem der Ansprüche 1 bis 3, **dadurch gekennzeichnet, dass** sie Mittel (23-25) zum Einstellen von Hand des Druckminderventils (21, 18) aufweist.

5. Anordnung nach Anspruch 4, **dadurch gekennzeichnet, dass** das Druckminderventil (21, 18) eine im Wesentlichen orthogonal zur Achse des Sockels (2) des Körpers (1) verlaufende Achse aufweist.

6. Anordnung nach Anspruch 5, **dadurch gekennzeichnet, dass** der Niederdruckkreislaufabschnitt (27) an dem dem Sockel (2) gegenüberliegenden Ende des Körpers (1) ins Freie (3) mündet.

7. Anordnung nach Anspruch 6, **dadurch gekennzeichnet, dass** der Niederdruckkreislaufabschnitt (27) an einer dem Mittel (25) zum Einstellen des Druckminderventils gegenüberliegenden Seite ins Freie mündet.

8. Anordnung nach einem der Ansprüche 3 bis 7, **dadurch gekennzeichnet, dass** sie zur Montage von jeweils einem Hochdruck- und Niederdruckanzeiger (7, 8) zwei Abgänge (10; 80) aufweist, die im Wesentlichen auf ein und derselben Seite des Körpers angeordnet sind und jeweils mit dem Hochdruckkreislaufabschnitt bzw. dem Niederdruckkreislaufabschnitt kommunizieren.

9. Anordnung nach Anspruch 8, **dadurch gekennzeichnet, dass** der zweite Gaskreislauf gegenüber der Abgänge (10, 80) ins Freie (29) mündet.

10. Anordnung nach einem der vorhergehenden Ansprüche, **dadurch gekennzeichnet, dass** mindestens einer der Hochdruck- und Niederdruckkreislaufabschnitte ein Rückschlagventil (40; 42) aufweist.

11. Anordnung nach einem der Ansprüche 3 bis 10, **dadurch gekennzeichnet, dass** der zweite Kreislauf (28, 29) ein Rückschlagventil (31) umfasst.

12. Anordnung nach einem der vorhergehenden Ansprüche, **dadurch gekennzeichnet, dass** das Druckminderventil ein Kolbenventil (21) ist und im Kolben ein Überdruckventil (41) umfasst.

13. Anordnung nach einem der vorhergehenden Ansprüche, **dadurch gekennzeichnet, dass** sie ferner ein auf die Flasche (B) montiertes, gleichzeitig als Transportabdeckung dienendes Schutzgehäuse (C) aufweist.

14. Anordnung nach Anspruch 13, **dadurch gekennzeichnet, dass** sie vollständig in dem an den einzelnen Ein- und Abgängen der Anordnung Zugangsöffnungen (D₁ - D₃) aufweisenden Gehäuse (C) angeordnet ist.

15. Anordnung nach Anspruch 14, **dadurch gekennzeichnet, dass** das Gehäuse (C) einen seitlichen Schlitz (F) zum Verstellen des Hebels (5) aufweist.

16. Anordnung nach einem der Ansprüche 13 bis 15, **dadurch gekennzeichnet, dass** das Gehäuse (C) mindestens teilweise aus Kunststoff hergestellt ist.

17. Gasflasche mit einer Anordnung nach einem der vorhergehenden Ansprüche.
